# EUROPEAN PATENT APPLICATION

(11) **EP 2 479 056 A1**
(43) Date of publication of application: **25.07.2012**
(21) Application number: 11151096.2
(22) Date of filing: 17.01.2011
(51) Int. Cl.: B60K 31/00, B60W 30/14, B60W 30/18

(54) **Method for speed control, speed control system and device for use with the speed control system**

(71) Applicant: Volvo Car Corporation, 405 31 Göteborg (SE)
(72) Inventor: Almkvist, Göran, 44331, Lerum (SE)

(57) **Abstract**

The present invention relates to a method for controlling the speed of a motor vehicle, a speed control system and a device for use with the speed control system. For improving the fuel economy, the method comprises monitoring at least one speed-related parameter of the vehicle (2), such as the accelerator pedal position determining a nominal speed based on said speed-related parameter, setting the engine (3) of the vehicle (2) in a driving mode or an idle mode at said nominal speed, setting the engine (3) of the vehicle (2) in an idle mode when the actual speed of the vehicle exceeds said nominal speed, setting the engine (3) of the vehicle (2) in the driving mode when the actual speed of the vehicle decreases to said nominal speed or falls below said nominal speed, and repeating, based on said fluctuations of the actual speed of the vehicle, said changes between driving mode and idle mode as long as the monitored speed-related parameter is substantially unaltered. The speed control system used at this method comprises at least monitoring means (4), calculating means (6) and setting means (8).

## Description

### TECHNICAL FIELD

The present invention relates to a method for controlling the speed of a motor vehicle, a speed control system for a motor vehicle and a device for use with the speed control system.

### BACKGROUND OF THE INVENTION

It is well known that it is possible to improve the fuel economy of motor vehicles by using the so called "pulse and glide"-technology as default mode. The term "pulse and glide" refers in principal to a way of conveying a vehicle by alternatively accelerating the vehicle and setting it in an idle mode. The improvement in fuel economy is typically 10-30%. Use in practice however, is restricted by acceleration perception, NVH and traffic dynamic flow issues. A related technology investigated today is the so called "idle coast", where the engine of the vehicle is stopped or set to idling only during a coast mode. This however, will only have minor effects on the fuel economy in test cycles or in cruising or driving modes.

From the publication WO 2008/130288 a method is known for increasing the active duration of an automatic freewheeling function in a vehicle with cruise control and during a cruise control active period. The function comprises means for determining a vehicle set speed for when said function is allowed to be activated and means for calculating a predetermined allowable vehicle speed drop to a first under speed value below said vehicle set speed.

### SUMMARY OF THE INVENTION

To fully use the "pulse and glide"-technology, it is necessary to overcome the problems mentioned above.

The object of the present invention is therefore, to propose a new way to utilize the "pulse and glide"-technology not only in coast mode but also in normal driving conditions, which is mainly at low engine loads, and thereby still obtain an improved fuel economy of about 10-30%.

Thus, based on said "pulse and glide"-technology, the above object is achieved according to the invention by presenting a method for controlling the speed of a motor vehicle, wherein at least one speed-related parameter of the vehicle is monitored, wherein, when the monitored speed-related parameter of the vehicle has been substantially unaltered for a predetermined period of time, a nominal speed at which the vehicle shall be conveyed is determined, based on said monitored, substantially unaltered speed-related parameter of the vehicle, wherein, using a setting means, the engine of the vehicle is set in a driving mode or an idle mode at said nominal speed when said nominal speed has been determined and the monitored speed-related parameter is kept substantially unaltered, wherein, using said setting means, the engine of the vehicle is set in an idle mode when the actual speed of the vehicle has exceeded said nominal speed by a predetermined maximum value without substantially altering the monitored speed-related parameter, wherein, using said setting means, the engine of the vehicle is set in the driving mode when the actual speed of the vehicle has decreased to said nominal speed or has fallen below said nominal speed by a predetermined maximum value without substantially altering the monitored speed-related parameter, and wherein, based on said fluctuations of the actual speed of the vehicle, said changes between driving mode and idle mode are repeated as long as the monitored speed-related parameter is substantially unaltered.

A speed-control system for performing the above-mentioned method comprises, according to the invention, a monitoring means which is configured to monitor at least one speed-related parameter of the vehicle, a calculating means which, when the monitored speed-related parameter of the vehicle has been substantially unaltered for a predetermined period of time, is configured to determine a nominal speed at which the vehicle shall be conveyed based on said monitored, substantially unaltered speed-related parameter of the vehicle, and a setting means, activatable by said calculating means, which upon activation is configured to set the engine of the vehicle in a driving mode or an idle mode at said nominal speed when said nominal speed has been determined and the monitored speed-related parameter is kept substantially unaltered, to set the engine of the vehicle in an idle mode when the actual speed of the vehicle has exceeded said nominal speed by a predetermined maximum value without substantially altering the monitored speed-related parameter, to set the engine of the vehicle in the driving mode when the actual speed of the vehicle has decreased to said nominal speed or has fallen below said nominal speed by a predetermined maximum value without substantially altering the monitored speed-related parameter, and to repeat, based on said fluctuations of the actual speed of the vehicle, said changes between driving mode and idle mode as long as the monitored speed-related parameter is substantially unaltered.

Furthermore, in an attempt to extend the period of time during which the engine of the vehicle is set in the idle mode, there is provided, according to the present invention, a vehicle, comprising the above-mentioned speed control system for a motor vehicle as well as a device which in turn comprises an electric motor which is configured to apply power to the vehicle to keep constant speed or reduce deceleration of the vehicle when the engine of the vehicle is set in an idle mode, and an alternator which, when the engine of the vehicle is set in the idle mode, is operated by said engine for supplying electric power to the electric motor.

Thus, contrary to the above-mentioned prior art publication, the speed control system according to the present invention does not require a cruise control but do operate in connection with a cruise control. The speed control system according to the present invention further permits predetermined variations of the actual speed not only below the nominal speed, but also above said nominal speed before the system is deactivated.

### BRIEF DESCRIPTION OF THE DRAWINGS

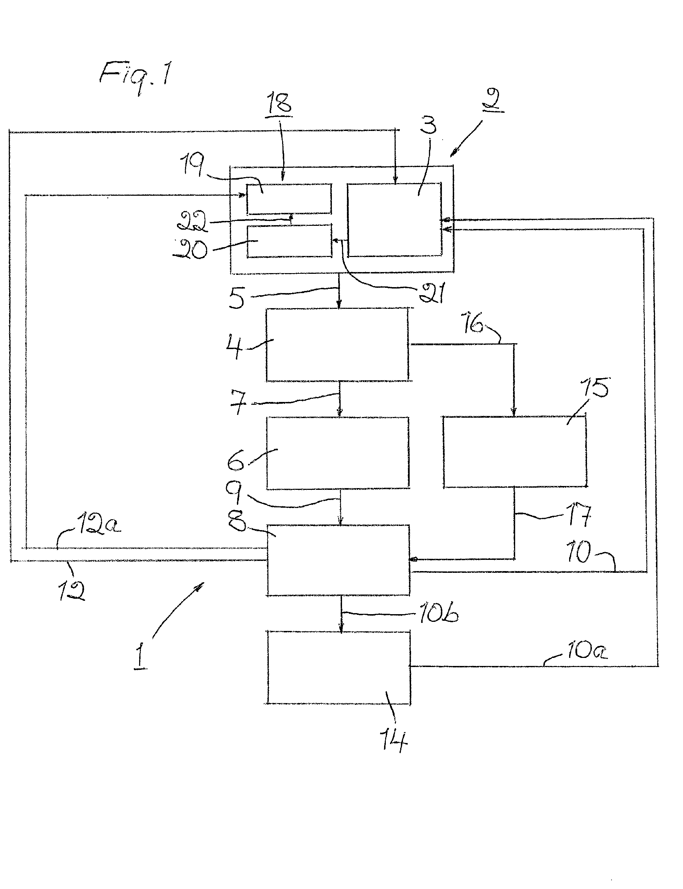

The present invention will be further described below by way of example only and with reference to the accompanying drawing, in which fig. 1 is a schematic view of a simple embodiment of a speed-control system as well as a device for use therewith according to the invention.

### DETAILED DESCRIPTION OF PREFERRED EMBODIMENTS

As is apparent from the above and from Fig. 1, the speed control system 1 according to the present invention is adapted for use in a motor vehicle 2 provided with an internal combustion engine 3 of a suitable type.

The speed control system 1 comprises in its most simple embodiment, inter alia, a monitoring means 4 which is configured to monitor at least one suitable speed-related parameter of the vehicle 2. This monitored speed-related parameter may be the position of the gas pedal of the vehicle 2. The monitored speed-related parameter may e.g. also be the torque of the engine 3 of the vehicle 2. Indications of the position and/or of the value of the monitored speed-related parameter are fed from the speed-related parameter in question to the monitoring means 4 via a line 5. These indications may be signals generated by e.g. a sensor means of a suitable type or by any other suitable indicator means. Accordingly, any changes of the speed-related parameter, e.g. changes of the position of the gas pedal, will immediately be detected and information about these changes transferred to the monitoring means 4 via the line 5.

The speed control system 1 further comprises a calculating means 6. When the monitored speed-related parameter has been substantially unaltered for a predetermined period of time, typically about 1-10 seconds, the calculating means 6 is configured to determine a nominal speed at which the vehicle 2 shall be conveyed. This nominal speed is then based on the monitored, substantially unaltered speed-related parameter of the vehicle 2, i.e. the nominal speed depends on at what relatively constant speed the driver has conveyed the vehicle during said predetermined period of time. That the speed-related parameter shall be "substantially unaltered" means e.g. that the driver is allowed to move the gas pedal by a small extent and thereby change the speed within a small interval without interrupting the process of determining the nominal speed of the vehicle 2. The sensitivity of the speed control system 1 can be regulated, but in principal, this means that the driver can not move the gas pedal such that the movements can be interpreted as if the driver wants to accelerate or decelerate the vehicle. Thus, as indicated below, the movements of the gas pedal may not be so extensive that the speed increases or decreases more than e.g. about 5 km/h. Information from the monitoring means 4 about the speed-related parameter, e.g. the position and/or value of the monitored speed-related parameter, is transferred to the calculating means 6 via a line 7.

When the nominal speed has been determined and, optionally, ambient conditions which may be considered are satisfactory, the calculating means 6 will activate a setting means 8 which is also a part of the speed control system 1 of the present invention. The setting means 8 is configured, upon activation by the calculating means 6, to set the engine 3 of the vehicle 2 typically in a driving mode at said nominal speed when said nominal speed has been determined and the monitored speed-related parameter is kept substantially unaltered. This means that the engine 3 is operating and drives the vehicle 2 at said nominal speed. The actual speed may, as indicated above, vary around the nominal speed to some extent without leaving the driving mode. A signal for activation of the setting means 8 is transferred from the calculating means 6 via a line 9 to said setting means. The setting means 8 sets the engine 3 in driving mode via a setting signal on a line 10.

The setting means 8 is also configured to set the engine 3 of the vehicle 2 in an idle mode when the actual speed of the vehicle has exceeded said nominal speed by a predetermined maximum value without substantially altering the monitored speed-related parameter. This is done via a setting signal on a line 12. This upper limit of the interval for the nominal speed within which the actual speed of the vehicle 2 may vary without interrupting the operation of the speed control system according to the present invention, is reached e.g. when the vehicle is driven downhill. It can also be reached if the setting means 8 is configured, each time the engine 3 of the vehicle 2 is set in a driving mode, to accelerate the vehicle and acceleration is continued until the actual speed of the vehicle has exceeded said nominal speed by said predetermined maximum value without substantially altering the monitored speed-related parameter. The acceleration rate may be e.g. about 0,1-0,6 m/s². The predetermined maximum value may be about 5 km/h, i.e. the setting means 8 is configured to set the engine 3 of the vehicle 2 in an idle mode when the actual speed of the vehicle has exceeded said nominal speed by about 5 km/h without substantially altering the monitored speed-related parameter.

The setting means 8 is configured to set the engine of the vehicle in the driving mode, via the line 10, when the actual speed of the vehicle 2 has decreased to said nominal speed or has fallen below said nominal speed by a predetermined maximum value without substantially altering the monitored speed-related parameter. This predetermined value may also be about 5 km/h, i.e. the setting means 8 is configured to set the engine 3 of the vehicle 2 in the driving mode when the actual speed of the vehicle has decreased to said nominal speed or has fallen below said nominal speed by about 5 km/h without substantially altering the monitored speed-related parameter.

Accordingly, the setting means 8 is configured to be active as long as the speed of the vehicle is within an interval of the nominal speed +/- 5 km/h or 0/-10 km/h (0 to -10 km/h) or somewhere inbetween. For example, if the vehicle obtains 70 km/h, the speed may then be decreased to 60 km/ for later on obtain 70 km/h again. Alternatively, if the vehicle obtains 70 km/h, the speed may then be decreased to 65 km/h to be increased to 75 km/h. Different scenarios are obviously possibly, but the interval do not often exceed 10 m/h.

The setting means 8, finally, is configured to repeat, based on said fluctuations of the actual speed of the vehicle 2, said changes between driving mode and idle mode as long as the monitored speed-related parameter is substantially unaltered, i.e. send setting signals to the engine when required in view of the actual speed of the vehicle compared to the determined nominal speed.

It should be noted that, under certain circumstances, the setting means 8 is configured, when activated, to set the engine 3 of the vehicle 2 in an idle mode, e.g. when driving downhill within a predetermined interval of the nominal speed, but will in such case, as is obvious from the above, change to driving mode when the nominal speed has been reached or at least when the actual speed of the vehicle has reached the lower limit of the interval for the nominal speed. Accordingly, the speed control system will start in a different mode, but will thereafter continue operating in the same manner and change between driving mode and idle mode as described above.

The speed control system 1 further comprises a control means 14 which is configured to accelerate the vehicle 2 and/or increase the torque of the engine 3 of the vehicle to compensate for e.g. uphill driving and/or increased vehicle load without substantially altering the monitored speed-related parameter. Thus, this acceleration is also carried through only within the predetermined interval of the nominal speed, i.e. as long as the speed control system 1 is operating. An acceleration signal is sent from the control means 14 to the engine 3 of the vehicle via a line 10a. If in idle mode when e.g. uphill driving begins, the system first changes to driving mode and then, if this is not sufficient, the control means 14 is activated (via a line 10b) to keep the actual speed within said interval of the nominal speed. The control means 14 is configured to accelerate the vehicle 2 about 0,1-0,6 m/s² to compensate for e.g. uphill driving and/or vehicle load without substantially altering the monitored speed-related parameter. This acceleration is acceptable to most drivers and passengers.

The speed control system 1 also comprises an interrupt control 15 which is configured to detect substantial alterations of monitored speed-related parameters of the vehicle and in view thereof deactivate the setting means 8. The interrupt control 15 is thus configured to detect e.g. substantial braking, substantial gas-pedal movement and substantial uphill driving and, in view thereof, deactivate the setting means. This means that the interrupt control 15 is connected to the monitoring means 4 via a line 16 for receiving information about the monitored speed-related parameter and is connected to send signals for deactivating the setting means 8 via a line 17.

Thus, in short, the speed control system 1 according to the present invention is primarily outlined to control, through the setting means 8, the actual speed of the vehicle 2 such that, as long as the speed-related parameter is substantially unaltered, said actual speed remains within a predetermined speed interval above and below the nominal speed. In driving mode, the speed control system 1 allows the actual speed to increase within this speed interval during e.g. driving downhill or if the speed control system is constructed to continuously accelerate the vehicle 2. At maximum actual speed, the speed control system 1 changes to idle mode and the actual speed is decreased to at least the determined nominal speed or to the lowest actual speed within said speed interval. During uphill driving, the control means 14 of the speed control system 1 is activated to accelerate the vehicle 2, particularly if the actual speed has reached the lower limit of the above--mentioned speed interval. Finally, when the acceleration or retardation of the vehicle 2 goes beyond the predetermined speed interval since e.g. the driver alters the position of the gas pedal to a substantial extent, the interrupt control 15 of the speed control system 1 deactivates the setting means 8 and the vehicle 2 must be conveyed in a conventional manner.

It is possible to use the speed control system 1 according to the present invention and the "pulse and glide"- technology provided thereby as the normal driving mode without negative impact on the acceleration perception by, during the idle mode, applying by means of an electric motor, power to the vehicle 2 to keep a constant speed or reduce the acceleration. Further, it is possible, in glide mode, to drive an alternator and supply electric power to the electric motor without storage in the battery of the vehicle 2. This results in optimized fuel consumption. It also results in an improved efficiency combustion timing, lambda and lower engine speed, reduced drive train friction etc..

Accordingly, a device 18 for use with the speed control system 1 described above is provided. This device 18 is in the embodiment according to Fig. 1 incorporated in the vehicle 2 in any suitable manner. The device 18 comprises, as indicated, an electric motor 19 which is configured to apply power to the vehicle 2 to maintain constant speed or reduce deceleration of the vehicle when the engine 3 of the vehicle is set in an idle mode, and an alternator 20 which, when the engine of the vehicle is set in the idle mode, is operated by said engine (via a line 21) for supplying electric power to the electric motor via a line 22. Thus, in the embodiment illustrated in Fig. 1, when the signal on line 12 from the setting means 8 for setting the engine 3 of the vehicle 2 in idle mode is sent to the engine, a signal from the setting means to activate the electric motor 19 is sent simultaneously to the electric motor via a line 12a.

It is possible to use conventional components such as 2-5 kW electric motor 19 and alternator 20 and minor software changes for control. Thereby, sufficient power is supplied to keep a constant speed around about 50 km/h and the range of the idle mode is vastly extended. The system voltage may also be optimized from a 12V conventional alternator to a higher voltage alternator either continuously or higher voltage only during the idle mode.

Further according to the invention, the electric motor 19 is configured to operate as a brake recuperator generator alone or in combination with the alternator 20. The speed control system 1 and the device 18 therefor can be applied to all types of engines (Otto, Diesel, turbo etc.). The speed control system 1 and the device 18 therefor can also be used with automatic gearboxes as well as with manual gearboxes and an electric clutch.

It is obvious to a skilled person that the present invention can be modified within the scope of the subsequent claims without departing from the idea and purpose of the invention. Thus, the speed control system described above may be provided with additional means for monitoring additional speed-related parameters and/or for monitoring ambient conditions and/or other vehicle and engine parameters than those related to the speed of the vehicle. Further, it is obvious that irrespective of in which mode the speed control system is activated, it operates as described above, in a repeating manner, changing between the driving mode and the idle mode based on the actual speed of the vehicle relative to the nominal speed thereof.

## Claims

1. Method for controlling the speed of a motor vehicle, **characterized by** monitoring at least one speed-related parameter of the vehicle (2),
determining, when the monitored speed-related parameter of the vehicle (2) has been substantially unaltered for a predetermined period of time, a nominal speed at which the vehicle shall be conveyed based on said monitored, substantially unaltered speed-related parameter of the vehicle,
setting, using a setting means (8), the engine (3) of the vehicle (2) in a driving mode or an idle mode at said nominal speed when said nominal speed has been determined and the monitored speed-related parameter is kept substantially unaltered, setting, using said setting means (8), the engine (3) of the vehicle (2) in an idle mode when the actual speed of the vehicle has exceeded said nominal speed by a predetermined maximum value without substantially altering the monitored speed-related parameter,
setting, using said setting means (8), the engine (3) of the vehicle (2) in the driving mode when the actual speed of the vehicle has decreased to said nominal speed or has fallen below said nominal speed by a predetermined maximum value without substantially altering the monitored speed-related parameter, and
repeating, based on said fluctuations of the actual speed of the vehicle, said changes between driving mode and idle mode as long as the monitored speed-related parameter is substantially unaltered.

2. Method according to claim 1, **characterized by**
accelerating the vehicle (2), each time the engine (3) of the vehicle is set in the driving mode, until the actual speed of the vehicle has exceeded said nominal speed by a predetermined maximum value without substantially altering the monitored speed-related parameter.

3. Method according to claim 1 or 2, **characterized by**
accelerating the vehicle (2) and/or increasing the torque of the engine (3) of the vehicle to compensate for e.g. uphill driving and/or increased vehicle load without substantially altering the monitored speed-related parameter.

4. Method according to any one of claims 1-3, **characterized by**
detecting substantial alterations of monitored speed-related parameters of the vehicle (2), and deactivating the setting means (8) in view thereof.

5. Method according to any one of claims 1-4, **characterized by**
detecting substantial braking, substantial gas-pedal movement and substantial uphill driving, and
deactivating the setting means (8) in view thereof.

6. Speed control system for a motor vehicle, **characterized in**
**that** the speed control system (1) comprises:
a monitoring means (4) which is configured to monitor at least one speed-related parameter of the vehicle (2),
a calculating means (6) which, when the monitored speed-related parameter of the vehicle (2) has been substantially unaltered for a predetermined period of time, is configured to determine a nominal speed at which the vehicle shall be conveyed based on said monitored, substantially unaltered speed-related parameter of the vehicle, and
a setting means (8), activatable by said calculating means (6), which upon activation is configured to set the engine (3) of the vehicle (2) in a driving mode or an idle mode at said nominal speed when said nominal speed has been determined and the monitored speed-related parameter is kept substantially unaltered, to set the engine (3) of the vehicle (2) in the idle mode when the actual speed of the vehicle has exceeded said nominal speed by a predetermined maximum value without substantially altering the monitored speed-related parameter, to set the engine (3) of the vehicle (2) in the driving mode when the actual speed of the vehicle has decreased to said nominal speed or has fallen below said nominal speed by a predetermined maximum value without substantially altering the monitored speed-related parameter, and to repeat, based on said fluctuations of the actual speed of the vehicle (2), said changes between driving mode and idle mode as long as the monitored speed-related parameter is substantially unaltered.

7. Speed control system according to claim 6, **characterized in**
**that** the monitoring means (4) is configured to monitor the position of the gas pedal as speed-related parameter.

8. Speed control system according to claim 6, **characterized in**
**that** the monitoring means (4) is configured to monitor the torque of the engine as speed-related parameter.

9. Speed control system according to any one of claims 6-8, **characterized in that** the calculating means (6) is configured to determine a nominal speed at which the vehicle (2) is conveyed after about 1-10 seconds of monitoring a substantially unaltered speed-related parameter of the vehicle.

10. Speed control system according to any one of claims 6-9, **characterized in that** the setting means (8) is configured, each time the engine (3) of the vehicle (2) is set in a driving mode, to accelerate the vehicle until the actual speed of the vehicle has exceeded said nominal speed by a predetermined maximum value without substantially altering the monitored speed-related parameter.

11. Speed control system according to any one of claims 6-10, **characterized in that** the setting means (8) is configured, each time the engine (3) of the vehicle (2) is set in a driving mode, to accelerate the vehicle by about 0,1-0,6 m/s² until the actual speed of the vehicle has exceeded said nominal speed by a predetermined maximum value without substantially altering the monitored speed-related parameter.

12. Speed control system according to any one of claims 6-11, **characterized in that** the setting means (8) is configured to be active as long as the speed of the vehicle (2) is within an interval of the nominal speed +/- 5 km/h.

13. Speed control system according to any one of claims 6-12, **characterized in that** the setting means (8) is configured to set the engine (3) of the vehicle (2) in an idle mode when the actual speed of the vehicle has exceeded said nominal speed by about 5 km/h without substantially altering the monitored speed-related parameter.

14. Speed control system according to any one of claims 6-13, **characterized in that** the setting means (8) is configured to set the engine (3) of the vehicle (2) in a driving mode when the actual speed of the vehicle has decreased to said nominal speed or has fallen below said nominal speed by about 5 km/h without substantially altering the monitored speed-related parameter.

15. Speed control system according to any one of claims 6-14, **characterized in that** the speed control system (1) further comprises a control means (14) which is configured to accelerate the vehicle (2) and/or increase the torque of the engine (3) of the vehicle to compensate for e.g. uphill driving and/or increased vehicle load without substantially altering the monitored speed-related parameter.

16. Speed control system according to claim 15, **characterized in that** the control means (14) is configured to accelerate the vehicle (2) about 0,1-0,6 m/s² to compensate for e.g. uphill driving and/or vehicle load without substantially altering the monitored speed-related parameter.

17. Speed control system according to any one of claims 6-16, **characterized in that** the speed control system (1) further comprises an interrupt control (15) which is configured to detect substantial alterations of monitored speed-related parameters of the vehicle (2) and in view thereof deactivate the setting means (8).

18. Speed control system according to any one of claims 6-17, **characterized in that** the speed control system (1) further comprises an interrupt control (15) which is configured to detect substantial braking, substantial gas-pedal movement and substantial uphill driving and in view thereof deactivate the setting means (8).

19. Vehicle, **characterized by** comprising the speed control system according to any one of claims 6-18 and an electric motor (19) which is configured to apply power to the vehicle (2) to keep constant speed or reduce deceleration of the vehicle when the engine (3) of the vehicle is set in an idle mode, and an alternator (20) which, when the engine (3) of the vehicle (2) is set in the idle mode, is operated by said engine for supplying electric power to the electric motor (19).

20. Vehicle according to claim 19, **characterized in that** the electric motor (19) is configured to operate as a brake recuperator generator alone or in combination with the alternator (20).
